# EUROPEAN PATENT APPLICATION

(11) **EP 0 695 688 A1**
(43) Date of publication of application: **07.02.1996**
(21) Application number: 94112003.2
(22) Date of filing: 01.08.1994
(51) Int. Cl.: B65B 25/00, A23L 1/16

(54) **Apparatus and process for packaging stranded food products**

(71) Applicant: SOCIETE DES PRODUITS NESTLE S.A., CH-1800 Vevey (CH)
(72) Inventor: Leonardt, Werner, S-265 31 Astorp (SE)

(57) **Abstract**

An apparatus for automatically folding and packaging stranded food products, for example pastas, into a tray. The apparatus utilizes a first conveyor (4) to convey a sheet of the food product (6) to a cutting station (8) where the sheet of food product is cut into a plurality of longitudinal strips (10). A second conveyor (26), which carries the trays (30), is positioned beneath the delivery end of the first conveyor. A guiding and cutting means (12-22) guides the strips of the sheet falling from the first conveyor into the trays carried on the second conveyor while transversely cutting the strips into selected lengths. Meanwhile, the second conveyor, or the guiding and cutting means, or both, is reciprocated back and forth to cause the strips falling from the guiding and cutting means to be folded in layers in a tray. A controller detects the position of the tray with respect to the guiding and cutting means and controls the reciprocation to cause the tray to be moved in an opposite direction when a layer of the strips in the tray reaches an end of the tray.

## Description

This invention relates to an apparatus for folding and packaging food products that are in the form of strands. The invention also relates to a process for folding and packaging the food product.

Pastas in fresh form provide many examples of food products in the form of strands. Commercial pasta in fresh form has a water content of about 25 to 30% by weight and is soft and resilient to the touch like fresh homemade pasta. Due to these high moisture contents, fresh commercial pastas are susceptible to bacterial action and therefore they are usually sold in sealed packets or trays.

One example of such a pasta is tagliatelli. Tagliatelli is a ribbon-like pasta which is about 4 to 6 mm wide, about 1 mm thick and 15 to 50 cm long. At the present time, the tagliatelli is produced in the form of a continuous pasta sheet which is transported on an endless conveyor to a cutting station. At the cutting station, the sheet is cut into a plurality of longitudinal strips of about 4 to 6 mm in width. The sheet is also cut transversely to separate the strips from the remainder of the sheet. Usually the strips are cut to be about 15 to 50 cm in length. Thereafter the strips are manually removed from the endless conveyor in bunches, folded and placed on another endless conveyor where they are transported to a packing station. At the packing station, the bunches are manually placed into trays and the trays placed onto a further endless conveyor to be transported to a sealing station. This process is very labour intensive, slow and has high production costs.

However, automation of the process is difficult since the sheets of dough are thin (about 1 mm) and are easily tearable. Mechanical handling of the dough should therefore be kept to a minimum and it should be gentle.

It is therefore an object of this invention to provide an apparatus and process for packaging stranded food products which permits ready automation.

Accordingly, this invention provides an apparatus for packaging stranded food products into a tray, the apparatus comprising:
a first conveyor to convey a sheet of the food product and having a delivery end;
a cutting station positioned along the length of the first conveyor to cut the sheet of food product into a plurality of longitudinal strips while the sheet of food product is being transported along the first conveyor;
a second conveyor positioned beneath the delivery end of the first conveyor to carry trays for receiving the stranded food product;
a guiding and cutting means to guide the strips of the sheet falling from the first conveyor into trays carried on the second conveyor and to transversely cut the strips into selected lengths;
a reciprocating means to move the second conveyor, or the guiding and cutting means, or both, back and forth to cause the strips falling from the guiding and cutting means to be folded in layers in a tray; and
a control means to detect the position of the tray with respect to the guiding and cutting means and to control the reciprocating means to cause the tray to be moved in an opposite direction when a layer of the strips in the tray reaches an end of the tray.

The apparatus provides the advantage that the food product is automatically cut into strips, the strips are layered into trays and cut into segments; and the trays sent for further processing. No manual steps are required and the sheet of dough may be processed rapidly; for example speeds of 17 m/min have been tested. Further, the mechanical manipulation of the sheet of dough is at a minimum and hence the possibility of tears and voids in the sheet of dough is reduced.

The apparatus is particularly suitable for cutting and packing folded pasta products; for example tagliatelli.

Preferably the guiding and cutting means comprises an inclined guiding surface positioned above a pair of first rollers; the inclined guiding surface delivering the strips of dough into the nip between the pair of first rollers; at least one of the first rollers having an elongate blade to transversely cut dough between the first rollers once every revolution.

The guiding and cutting mean may further comprise a pair of second rollers arranged between the inclined guiding surface and the pair of first rollers to grip and feed the strips of dough to the pair of first rollers.

The invention also provides a process for packaging stranded food products comprising cutting a sheet of the food product into longitudinal strips; guiding the strips through a guide into a tray while reciprocating the tray or the guide to cause folded layers of the strips in the tray; transversely cutting the strips to separate the strips in the tray from the remainder; and moving the tray from under the guide.

Preferably the tray is reciprocated under the guide while the strips are fed into the tray.

Embodiments of the invention are now described, by way of example only, with reference to the drawings in which:
Figure 1 is a schematic illustration on the apparatus in operation;

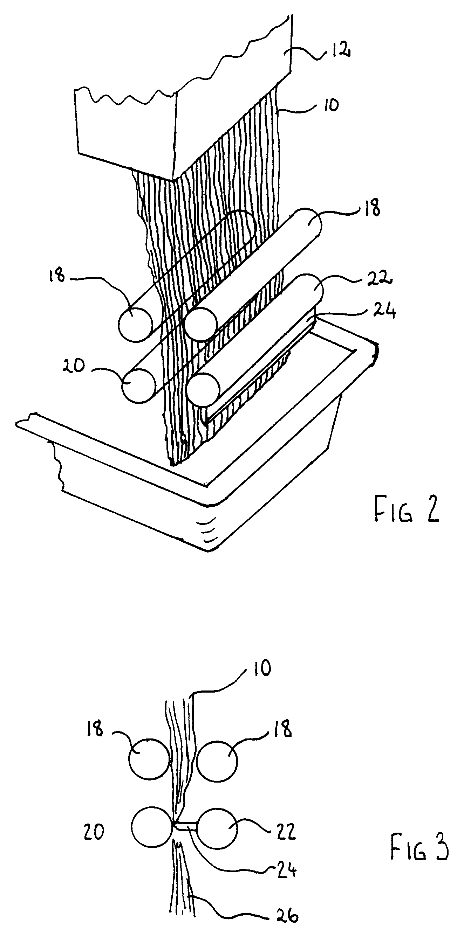

Figure 2 is a prospective view of the squeezing and cutting rollers;
Figure 3 is a side view of the cutting rollers; and
Figures 4(a) to (d) illustrate schematically the filling of a tray.

The packaging apparatus 2 has a cutting conveyor 4 upon which a sheet of dough 6 is transported to a cutting station 8. The cutting conveyor 4 may comprise a flexible belt rotating around two return pulleys or rollers as is conventional. In the cutting station 8, the sheet of dough 6 is cut into a plurality of longitudinal strips 10 each of a width in the range of 3 to 10 mm. However, unlike in the conventional process, the strips 10 remain attached to the sheet of dough 6 being fed into the cutting station 8. The cutting station 8 is a conventional apparatus such as that sold under the trade name "Pasta Slitter" by Giacomo Toresani SpA, of I-20162 Milan, Italy, except in that no transverse cutting mechanisms are provided; or these mechanisms are disabled. The width and number of the strips 10 can be varied by increasing or decreasing the number of blades (not shown) in the cutting station 8.

Downstream of the cutting station 8, the strips 10 are transported to fall into a hopper 12 positioned beneath the end of the cutting conveyor 4. The hopper 12 is made of stainless steel or some other suitable hygienic and non-stick material. The upper opening 14 of the hopper 12 is wider, both longitudinally and transversely, than the lower opening 16 so that the strips 10 may be guided to a selected position.

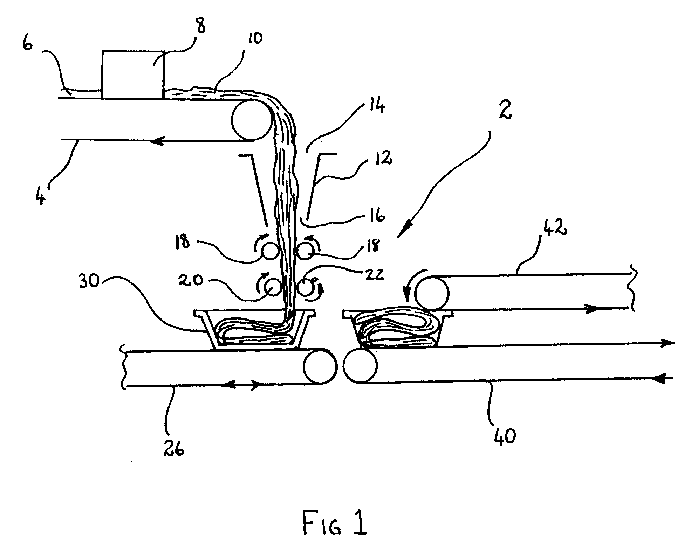

A pair of co-operating squeezing rollers 18 are positioned beneath the lower opening 16 of the hopper 12. Each squeezing roller 18 is of length at least equal to the combined width of all the strips 10 leaving the hopper 12 abreast so that all strips 10 may be engaged at once. The squeezing rollers 18 are positioned one on each side of the lower opening 16 of the hopper 12 so that the strips 10 moving from the lower opening 16 pass between the directing rollers 18. Further, the squeezing rollers 18 are separated from one another a distance substantially equal to the thickness of approximately four layers of the strips 10 so that the strips 10 passing between the squeezing rollers 18 are ordered and directed by the squeezing rollers 18. The squeezing rollers 18 are driven by motors (not shown) to rotate in opposite directions to one another and to move downwardly strips 10 passing between them. The direction of movement of each squeezing roller 18 is illustrated in Figure 1.

A pair of cutting rollers 20,22 are positioned beneath the squeezing rollers 18 in register with the squeezing rollers 18. Each cutting roller 20,22 is also of length at least equal to the combined width of all the strips 10 leaving the hopper 12 abreast so that all strips 10 may be engaged at once. Similarly, the cutting rollers 20,22 are positioned so that the strips 10 moving from between the squeezing rollers 18 pass between the cutting rollers 20,22. The cutting rollers 20,22 are also driven by motors (not shown) to rotate in opposite directions to one another to move downwardly strips 10 passing between them. The direction of movement of each cutting roller 20,22 is illustrated in Figure 1.

One cutting roller 22 carries an elongate blade 24 which projects from its surface a distance equal to the distance between the cutting rollers 20,22. In this way, rotation of the cutting rollers 20, 22 causes the blade 24 to engage the other cutting roller 20 once during each rotation of 360°. When the blade 24 engages the other cutting roller 20, the strips 10 between the cutting rollers 20, 22 are cut transversely.

The squeezing rollers 18 and the cutting rollers 20, 22 are made of stainless steel or some other suitable hygienic and non-stick material. The cutting roller 22 is of diameter such that its circumference corresponds roughly to a desired length of the strips 10. In this way, one rotation of the cutting roller 22 causes cutting of the strips 10 moving between the cutting rollers 20, 22 into the desired length. In figure 3, the cutting rollers 20, 22 are shown in their cutting position with the blade 24 having just cut a segment 26 from the strips 10.

A reciprocating conveyor 26 is positioned beneath the cutting rollers 20, 22. The reciprocating conveyor 26 comprises a suitable flexible belt rotating between two return pulleys as is conventional. However, at least one of the return pulleys is driven by a servo motor (not shown) which is able to rapidly and controllably change direction. Examples of suitable servo motors are the Allen-Bradley OSS series of digital servo drives which may be obtained from Allen-Bradley, Milwaukee, WI 53294, USA. However any suitable adjustable speed drive may be used. In this way, the direction of transport of the reciprocating conveyor 26 may be rapidly and controlably changed.

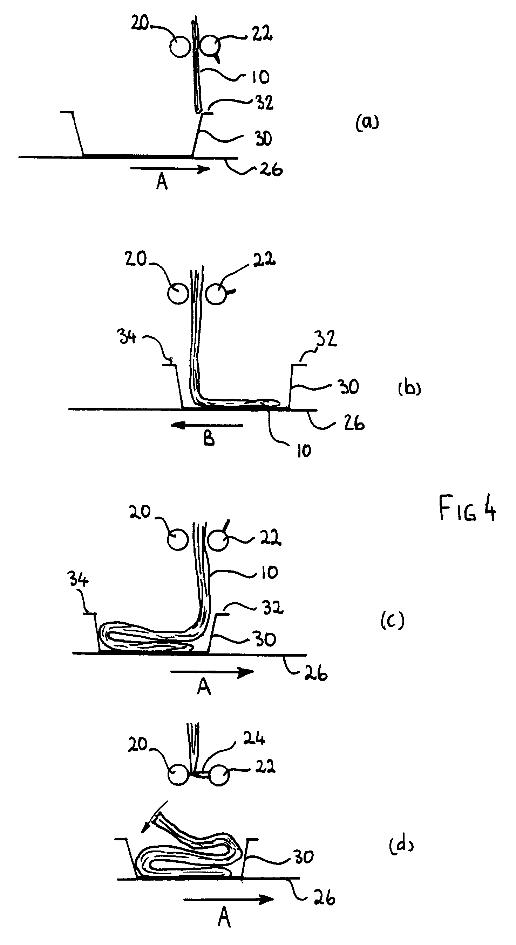

Referring now to figure 4, in use, empty trays 30 are transported one after the other on the reciprocating conveyor 26 to a position beneath the cutting rollers 20,22. Once the leading edge 32 of the tray 30 is aligned under the gap between the cutting rollers 20, 22, the ends of the strips 10 being delivered through the cutting rollers 20, 22 are positioned just above the tray 30. This position is illustrated in figure 4a. The tray 30 continues to move in the direction of arrow A and the strips 10 are delivered into the tray 30. Once the incoming strips 10 are aligned above the trailing edge 34 of the tray 30, the direction of movement of the reciprocating conveyor 26 is reversed to that the tray 30 is moved in direction of arrow B. At the point in time that this occurs, a layer of strips 10 has already been placed along the floor of the tray 30. This position is illustrated in figure 4b.

The tray 30 is then moved in the direction of arrow B until the incoming strips 10 are once again aligned above the leading edge 32 of the tray 30. Then the direction of movement of the reciprocating conveyor 26 is again reversed so that the tray 30 then begins to move once again in the direction of arrow A. At this point, a second layer of strips has been folded over the first layer. This is illustrated in figure 4c.

The tray 30 is then reciprocated back and forth in this manner until the tray 30 has been filled with folded layers of the strips 10. At this point, the blade 24 on the cutting roller 22 has completed one revolution and cuts the strips 10. The portion of the cut strips 10 above the tray 30 fall into the tray 30 as the tray 30 moves from under the cutting rollers 20, 22 in the direction of arrow A. This position is illustrated in figure 4d.

As is best illustrated in figure 1, the tray 30 is then transported onto a sealing conveyor 40 for further processing. The next tray 30 on the reciprocating conveyor 26 then moves into position beneath the cutting rollers 20, 22. The further processing of the filled trays 30 may include pushing down of the layered pasta using a pushing conveyor 42 arranged above the sealing conveyor 40 a distance equal to the depth of the trays 30. In this way, any pasta projecting above any tray 30 is pushed down into the tray 30 when the tray 30 passes between the sealing conveyor 40 and the pushing conveyor 42. Clearly, the surfaces of the sealing conveyor 40 and the pushing conveyor 42 which engage the tray 30 move in the same direction and at the same speed.

The operation of the reciprocating conveyor 26 is controlled by using suitably placed position sensors (not shown) which detect the position of the tray 30 beneath the cutting rollers 20, 22. Examples of suitable position sensors are optical encoders, resolvers, photocells or proximity switches. Such sensors are commercially available and may be obtained from many suppliers; for example Allen-Bradley. The position sensors are connected to suitable process control systems which drive the servo motor driving the reciprocating conveyor. Conventional process control systems may be used. For example an Allen-Bradley SLC 500 system may be used.

Since the trays 30 on the reciprocating conveyor 26 are subjected to sharp changes of direction, to prevent slipping of the trays 30 on the reciprocating conveyor 26, the reciprocating conveyor 26 may include suitable locking means (not shown) for the trays 30. In a simple form, the locking means may comprise a plurality of transverse bars spaced along the length of the reciprocating conveyor 26. The bars are arranged in pairs that are positioned a distance equal to the length of each tray 30 so that one bar engages the tray 30 in front of its leading edge 32 while the other bar engages the tray 30 behind its trailing edge 34.

In another embodiment, the hopper 12, squeezing rollers 18 and the cutting rollers 20,22 are carried on a movable support which is able to reciprocate back and forth over the reciprocating conveyor 26. The movable support may be a frame which runs on rails; the movable support being moving into position using suitable servo motors or pneumatic or hydraulic drives. In this case, the process control systems control the position of the movable support. Similarly, the position sensors detect the position of the movable support above the tray. Hence, instead of reciprocating the reciprocating conveyor 26, the reciprocating conveyor 26 is stopped when a tray 30 is aligned beneath the cutting rollers 20, 22 and the movable support is reciprocated to fold the strips 10 in the tray 30.

In a more complex embodiment, the hopper 12, squeezing rollers 18 and the cutting rollers 20,22 are again carried on a movable support which is able to reciprocate back and forth over the reciprocating conveyor 26. However, the reciprocating conveyor 26 also reciprocates; the reciprocating of the conveyor 26 and the movable support being coupled so that the strips 10 are folded in the tray 30.

In a further embodiment, the squeezing rollers 18 are dispensed with leaving only the cutting rollers 20,22. Further, the cutting rollers 20, 22 may be replaced with a simple transverse cutting blade which is controlled to cut the strips 10 into segments of desired length.

It will be appreciated that numerous modifications may be made to the embodiments described with departing from the scope of the invention.

## Claims

1. An apparatus for packaging stranded food products into a tray, the apparatus comprising:
a first conveyor to convey a sheet of the food product and having a delivery end;
a cutting station positioned along the length of the first conveyor to cut the sheet of food product into a plurality of longitudinal strips while the sheet of food product is being transported along the first conveyor;
a second conveyor positioned beneath the delivery end of the first conveyor to carry trays for receiving the stranded food product;
a guiding and cutting means to guide the strips of the sheet falling from the first conveyor into trays carried on the second conveyor and to transversely cut the strips into selected lengths;
a reciprocating means to move the second conveyor, or the guiding and cutting means, or both, back and forth to cause the strips falling from the guiding and cutting means to be folded in layers in a tray; and
a control means to detect the position of the tray with respect to the guiding and cutting means and to control the reciprocating means to cause the tray to be moved in an opposite direction when a layer of the strips in the tray reaches an end of the tray.

2. An apparatus according to claim 1 in which the guiding and cutting means comprises an inclined guiding surface positioned above a pair of first rollers; the inclined guiding surface delivering the strips of dough into the nip between the pair of first rollers; at least one of the first rollers having an elongate blade to transversely cut dough between the first rollers once every revolution.

3. An apparatus according to claim 2 in which the guiding and cutting means further comprises a pair of second rollers arranged between the inclined guiding surface and the pair of first rollers to grip and feed the strips of dough to the pair of first rollers.

4. An apparatus according to any one of claims 1 to 3 in which the reciprocating means causes the second conveyor to reverse its direction of transport intermittently to cause the strips falling from the guiding and cutting means to be folded in layers in a tray.

5. An apparatus according to claim 4 in which the reciprocating means comprises a servo motor driving the second conveyor.

6. A process for packaging stranded food products comprising cutting a sheet of the food product into longitudinal strips; guiding the strips through a guide into a tray while reciprocating the tray or the guide to cause folded layers of the strips in the tray; transversely cutting the strips to separate the strips in the tray from the remainder; and moving the tray from under the guide.

7. A process according to claim 6 in which the strips are guided between a pair of rotating rollers; one of the rollers having an elongate blade to transversely cut the strips once each revolution.

8. A process according the claim 6 or claim 7 in which the tray is caused to reciprocate by causing a conveyor on which the tray is transported, to reciprocate.
